**Europäisches Patentamt**

**European Patent Office**

**Office européen des brevets**

(19)

(11) Veröffentlichungsnummer: **0 003 752**
**B1**

(12) **EUROPÄISCHE PATENTSCHRIFT**

(21) Anmeldenummer: **79100214.0**

(22) Anmeldetag: **25.01.79**

(51) Int. Cl.³: **C 01 B 33/28,**
**B 01 J 29/06,**
**B 01 D 15/04, B 01 J 20/16**

(54) Verfahren zur Herstellung von Molekularsieb enthaltenden Granulaten guter mechanischer Festigkeit, die nach diesem Verfahren hergestellten Granulate und deren Verwendung.

(30) Priorität: **10.02.78 DE 2805546**

(43) Veröffentlichungstag der Anmeldung:
**05.09.79 Patentblatt 79/18**

(45) Bekanntmachung des Hinweises auf die Patenterteilung:
**18.03.81 Patentblatt 81/11**

(84) Benannte Vertragsstaaten:
**BE CH DE FR GB IT LU NL SE**

(56) Entgegenhaltungen:
DE - A - 2 008 444
DE - B - 1 165 562
DE - B - 1 192 164
DD - A - 53 052
FR - A - 1 546 121
GB - A - 998 262
US - A - 3 714 072
US - A - 4 022 714

CHEMICAL ABSTRACTS, Vol. 88, Nr. 4, 23. Januar 1978, Zusammenfassung Nr. 28244y, Columbus, Ohio, USA, EJSYMONT JAN et al.: "Effect of the composition of a binding agent having the character of sodium-calcium and sodium-magnesium glass on the properties of granulated X-type zeolite. Determination of the crushing strength of catalysts", Seite 322

CHEMICAL ABSTRACTS, Vol. 88, Nr. 2, 1. September 1978, Zusammenfassung Nr. 12333r, Columbus, Ohio, USA EJSYMONT JAN et al.: "The formation of zeolite 13X with binding agents composed of sodium-calcium and sodium-magnesium glasses," Seite 333

(73) Patentinhaber: **Kali-Chemie Aktiengesellschaft**
**Postfach 220 Hans-Böckler-Allee 20**
**D-3000 Hannover 1 (DE)**

(72) Erfinder: **Derleth, Helmut, Dr.rer.nat.**
**Grosse Drakenburger Strasse 79**
**D-3070 Nienburg (DE)**

(72) Erfinder: **Sauer, Günter**
**Prinzenstrasse 51**
**D-3070 Nienburg (DE)**

(72) Erfinder: **Bretz, Karl-Heinz**
**Berliner Ring 202**
**D-3070 Nienburg (DE)**

# 0 003 752

Verfahren zur Herstellung von Molekularsieb enthaltenden Granulaten guter mechanischer Festigkeit, die nach diesem Verfahren hergestellten Granulate und deren Verwendung

Molekularsiebe fallen bei der technischen Herstellung in der Regel in Form von feinteiligen Kristallpulvern an und müssen daher für die meisten Verwendungszwecke zu größeren Agglomeraten konfektioniert werden. Für den Einsatz der Molekularsiebe als Trockenmittel liegt die Schwierigkeit bei der Konfektionierung darin, Granulate mit guter mechanischer Festigkeit herzustellen, ohne daß die Adsorptionskapazität des Molekularsiebs herabgesetzt ist.

Bei den meisten bekannten Verfahren zur Herstellung von Formkörpern aus Molekularsieben wird Wasserglas und/oder Ton als Bindemittel eingesetzt. Die erhaltenen Formkörper können dann zwar eine ausreichende mechanische Festigkeit besitzen, das Wasseraufnahmevermögen ist jedoch herabgesetzt. So ist in der DT-AS1 192 164 ein Verfahren zur Herstellung von Molekularsieben in Kugelform beschrieben, wonach feinkristallines Molekularsieb mit Wasserglas angeteigt und in eine wäßrige Lösung von Natrium-, Erdalkalimetall-, Nickel-, Kobalt- oder Aluminiumsalzen als Erstarrungsflüssigkeit eingetropft wird. Die danach erhaltenen Kugeln besitzen zwar eine gute Wasseraufnahmefähigkeit, ihre mechanische Festigkeit ist jedoch unzureichend.

Gemäß dem in der DT - AS 1 165 562 beschriebenen Verfahren wird die Granulation von Molekularsieben dadurch erreicht, daß man sie mit einem Kieselsäuresol zu einer fließfähigen Suspension mit einem pH-Wert von 8,0 bis 10,0, vorzugsweise von 8,2 bis 9,0, verrührt, diese Suspension mit kleinen Mengen einer Magnesiumoxidsuspension vermischt und das Gemisch in eine mit Wasser nicht mischbare Flüssigkeit eintropfen läßt, die Granulate trocknet und durch thermische Behandlung härtet. Die Adsorptionskapazität der dabei erhaltenen Granulate entspricht der des darin enthaltenen Zeoliths. Die Schwierigkeit bei diesem Verfahren ist, daß die Zeolith-Kieselsäuresol-Suspension auf einen eng begrenzten pH-Bereich eingestellt werden muß, da bei zu geringer alkalischer Einstellung die Zeolith-Suspension sich relativ schnell in eine weiche Gallerte umwandelt; andererseits verliert bei nur wenig höherem pH-Wert das Gelierungsmittel Magnesiumoxid seine Wirksamkeit. Daher müssen die Molekularsiebe durch gründliches Auswaschen von wesentlichen Mengen alkalischer Verunreinigung befreit werden. Außerdem besitzen die Gelkugeln vor der Aushärtung keine Naßfestigkeit; es müssen daher besondere Vorkehrungen getroffen werden, um ein Ineinanderlaufen sowie Ankleben an den Gefäßwänden, was schließlich zur Verkrustung führen kann, zu verhindern.

Gemäß Zesz. Nauk. Univ. Jagiellon, Pr. Chem. 1977, 22, Seite 163—85 sind Formkörper bekannt, die Zeolith 13 X und ein Bindemittel enthalten, das in spezieller Weise aus Wasserglas, Kieselsäuregel und z.B. Magnesiumoxid hergestellt wurde. Die Adsorptionskapazität der Granulate beträgt aber nur 2/3 der entsprechend der eingesetzten Zeolith-Menge zu erwartenden Kapazität.

Aus der DD - PS 530 52 ist ein Verfahren bekannt, das Formkörper aus Zeolith und einem festen, anorganischen Bindemittel, vorzugsweise Ton, unter Zusatz von Wasser sowie gegebenenfalls eines löslichen, anorganischen Bindemittels durch Aufbaugranulation herstellt. Als Bindemittel sind u.a. Erdalkalioxide und Aluminiumoxid genannt; als gegebenenfalls zuzusetzende lösliche, anorganische Bindemittel sind neben vielen anderen auch lösliche Alkalisilikate angeführt. Die Verfahrensprodukte sind aber schalenförmig aufgebaut und nicht homogen. Die Bereitung einer homogenen Paste führt nach Aushärtung bzw. Trocknung zu Formkörpern mit unbefriedigender Festigkeit. Außerdem ist der Schrift nicht zu entnehmen, daß sich tonfreie Formkörper durch gesteigertes Adsorptionsvermögen auszeichnen könnten.

Es wurde nun ein die geschilderten Nachteile nicht aufweisendes Verfahren zur Herstellung von Molekularsieb enthaltenden Granulaten gefunden, die sich bei guter mechanischer Festigkeit durch eine hohe Adsorptionskapazität auszeichnen. Gemäß dem erfindungsgemäßen Verfahren teigt man ein Molekularsiebpulver und Metalloxide in einer Silikatlösung gegebenenfalls unter Zusatz von Wasser an, verformt das Gemisch, nimmt einen Basenaustausch vor, trocknet und tempert bei 300 bis 400°C.

Bei Verwendung von Magnesiumoxid als Metalloxid besitzen die Granulate überraschenderweise eine um bis zu 123% über den vorhandenen Molekularsiebanteil hinaus höhere Adsorptionskapazität.

Als Metalloxide eignen sich für das erfindungsgemäße Verfahren außer Magnesiumoxid die Oxide von Kupfer, Barium, Zink, der Seltenen Erden, Titan, Zinn, Blei, Vanadin, Antimon, Chrom, Mangan, Eisen, Kobalt oder Nickel bzw. deren Gemische. Man erhält auf diese Weise mechanisch feste Granulate, die auch als Katalysatoren oder Katalysatorträger eingesetzt werden können.

Für die Verwendung der Granulate als Trockenmittel empfiehlt sich vornehmlich der Zusatz von Magnesiumoxid; jedoch ergeben auch die Oxide anderer Metalle eine Steigerung der Adsorptionskapazität, so daß man durch Wahl und Dosierung des Metalloxidzusatzes die Adsorptionskapazität des Granulates nach Wunsch festlegen kann. Es gilt folgende Reihenfolge abnehmender Wirksamkeit:

Durch MgO Zuwachs an Adsorptionsvermögen von 22—123%

| | | | | | |
|---|---|---|---|---|---|
| CuO | „ | „ | „ | „ ca. | 37% |
| $Fe_2O_3$ | „ | „ | „ | „ ca. | 18% |

| | | | | | | |
|---|---|---|---|---|---|---|
| TiO$_2$ | ,, | ,, | ,, | ,, | ca. | 11% |
| Cr$_2$O$_3$ | ,, | ,, | ,, | ,, | ca. | 9% |
| SnO$_2$ | ,, | ,, | ,, | ,, | ca. | 8% |
| Sb$_2$O$_3$ | ,, | ,, | ,, | ,, | ca. | 8% |
| NiO | ,, | ,, | ,, | ,, | ca. | 4% |
| ZnO | ,, | ,, | ,, | ,, | ca. | 2% |
| PbO | ,, | ,, | ,, | ,, | ca. | 1% |
| MnO$_2$ Abnahme | ,, | | ,, | ,, | ca. | 3% |
| V$_2$O$_5$ | ,, | ,, | ,, | ,, | ca. | 12% |
| CO$_2$O$_3$ | ,, | ,, | ,, | ,, | ca. | 15% |
| RE$_2$O$_3$ (Seltene Erden) | | | | | | |
| | ,, | ,, | ,, | ,, | ca. | 16% |
| BaO | ,, | ,, | ,, | ,, | ca. | 39% |

In der Regel wird man die Metalloxide, die eine Abnahme des Adsorptionsvermögens bedingen, nicht für Trockenmittel einsetzen, sondern diese Granulate werden als Katalysatoren oder Katalysatorträger angewandt.

Der Prozentgehalt der Granulate an den einzelnen Bestandteilen kann in weiten Grenzen schwanken. Bezogen auf den Gesamtfeststoff des Granulats können die Metalloxide in einer Gesamtmenge von 5 bis 94, vorzugsweise 9 bis 50 Gew.-%, das Molekularsieb in einer Menge von 1 bis 95, vorzugsweise 27 bis 79 Gew.-% und das wasserlösliche Silikat in einer Gesamtmenge von 5 bis 50, vorzugsweise 12 bis 28 Gew.-%, berechnet als Feststoff, d.h. als SiO$_2$ plus ggf. Na$_2$O eingesetzt, werden. Die getemperten Granulate haben dann praktisch die gleiche Zusammensetzung; ihr SiO$_2$-Anteil ist bei Verwendung von Wasserglas natürlich entsprechend geringer. Die bevorzugt als Trockenmittel eingesetzten MgO-haltigen Granulate bestehen aus 1 bis 95, vorzugsweise 27 bis 79 Gew.-% eines Molekularsiebes, 5 bis 94, vorzugsweise 9 bis 50 Gew.-% MgO und 5 bis 38, vorzugsweise 9 bis 22 Gew.-% SiO$_2$.

Als Silikatlösung eignet sich Natron- oder Kaliwasserglas oder auch Guanidinsilikat und Gemische davon. Bei Verwendung von Guanidinsilikatlösung werden keine zusätzlichen Natriumionen in das Granulat eingebracht, da sich der Guanidinanteil bei der Temperung ab 120°C rasch zersetzt und verflüchtigt. Geeignet sind Guanidinsilikatlösungen mit einem SiO$_2$-Gehalt von 20 bis 40 Gew.-%, vorzugsweise von 25 bis 35 Gew.-%. Bei der Natriumsilikatlösung sollte das Molverhältnis von Na$_2$O zu SiO$_2$ 0,26 bis 0,49, vorzugsweise 0,27 bis 0,30 betragen.

Nach dem erfindungsgemäßen Verfahren lassen sich Molekularsiebe der unterschiedlichsten Typen z.B. A, X, Y, SK 20 oder Gemische davon zu Granulaten verarbeiten. Sie können auch in ionenausgetauschter Form vorliegen.

Die Verformung kann auf mechanischem Wege wie auch durch Fällgranulation erfolgen. Die Gemische aus Molekularsiebpulver, Metalloxid- und Silikatlösung lassen sich strangpressen, tablettieren oder auch auf dem Drehteller, in einer Granuliertrommel oder durch Merumerizer verformen.

Bei der Verformung des Gemisches durch Eintropfen in eine Fälllösung wird vorzugweise eine wäßrige Lösung eines Ammoniumsalzes wie Ammoniumsulfat, Ammoniumacetat, Ammoniumchlorid verwandt. Das hat den Vorteil, daß keine Fremdionen in das Granulat eingeführt werden. Die Konzentration der Ammoniumsalzlösung kann zwischen 12 und 36, vorzugsweise 15 und 33% liegen.

Damit das Gemisch eine geeignete Konsistenz hat, soll sein Wassergehalt einschließlich dem aus der Silikatlösung stammendem Wasser beim mechanischen Verformen 25—56, vorzugsweise 31 bis 53 Gew.-% und beim Verformen durch Fällung 45 bis 200, vorzugsweise 47 bis 163 Gew.-% bezogen auf den Gesamtfeststoffgehalt betragen.

Der Basenaustausch wird auf die bekannte Weise mit einer Ammoniumsalzlösung vorgenommen. Es ist vorteilhaft, nach dem mechanischen Verformen die Ammoniumsalzlösung in einer Konzentration von 5 bis 33, vorzugsweise von 15 bis 25%, und nach dem Verformen durch Fällung in einer Konzentration von 2 bis 10, vorzugsweise von 3 bis 5% einzusetzen.

Die Trocknung kann bei Zimmertemperatur oder höheren Temperaturen vorgenommen werden;

# 0 003 752

empfehlenswert sind Temperaturen von 100 bis 140°C.

Gegenüber dem Stand der Technik bietet das erfindungsgemäße Verfahren zahlreiche Vorteile:

1. Es ist nicht erforderlich, einen eng begrenzten pH-Bereich einzuhalten; die Gefahr der vorzeitigen Gelierung besteht nicht, auch ein stark alkalischer pH-Wert stört nicht.

2. Durch die Möglichkeit, die Verformung auf mechanischem Wege durchzuführen, läßt sich eine wesentlich größere Bruchhärte der Granulate erreichen.

3. Durch Verwendung einer wäßrigen Erstarrungslösung anstelle einer organischen Fällflüssigkeit wird eine Verunreinigung der Granulate mit organischer Substanz und damit auch ihre Dunkelfärbung vermieden; denn bei der Temperung tritt eine Zersetzung der organischen Substanz ein, die zu Kohlenstoffeinschlüssen führt. Demgegenüber findet in der Ammoniumsalz-Fällösung bereits ein Basenaustausch statt; es werden keine Fremddionen eingeschleppt.

4. Wasserglas ist deutlich billiger als stabilisiertes Kieselsäuresol, dessen übliche Herstellung über Ionenaustauscher schwierig und teuer ist. Bei Verwendung von Guanidinsilikatlösung werden nicht zusätzlich Natriumionen in das System gebracht, die hinterher wieder entfernt werden müssen.

5. Als Magnesiumoxid kann eine technische Qualität eingesetzt werden. Es ist nicht erforderlich, von Magnesia usta extra leicht auszugehen, um ein geeignetes hydratisiertes Magnesiumoxid zu erhalten.

Trotz dieser Vereinfachung und Verbilligung im Verfahren zeichnen sich die erhaltenen Granulate durch einen erheblichen technischen Fortschritt aus:

1. Erhöhung der Adsorptionskapazität bei 20% relativer Feuchte und 25°C bis zu max. 123% über dem Gehalt an Molekularsieb hinaus bei guter mechanischer Festigkeit des Granulats. Gleichzeitig ist damit eine Einsparung des teuren Molekularsiebes durch Ersatz billigerer Materialien, wie z.B. Magnesiumoxid, gegeben.

2. Bei der Verformung durch Fällung besitzen die Gelperlen eine gute Naßfestigkeit; d.h. die Perlen zerbrechen nicht bei der Handhabung und beim Basenaustausch, der Anfall an Ausschuß ist daher gering.

3. Die Granulate sind wasserfest; d.h. sie zerspringen nicht, wenn sie mit Spritzwasser in Berührung kommen oder in Wasser eingebracht werden.

4. Es können Formkörper und Kugelgranulate unterschiedlichster Durchmesser hergestellt werden.

Für die Herstellung von Kugelgranulaten mittlerer bis kleinster Abmessungen wird man das Fällverfahren bevorzugen; die mechanische Verformung eignet sich besonders gut für die Herstellung von größeren Formkörpern.

5. Molekularsiebe untershiedlichster Art z.B. vom Typ A, X, Y, SK 20 sowie ionenausgetauschte Molekularsiebe können nach dem erfindungsgemäßen Verfahren zu Granulaten verformt werden.

Mit Molekularsieb X konnte sogar eine Steigerung der Wasserdampfadsorptionskapazität bei 20% relativer Feuchte und 25°C bis 182% über die Kapazität des Anteils an Molekularsieb hinaus erreicht werden.

## Beispiele

Molekularsiebpulver, Oxidpulver und Silikatlösung und gegebenenfalls Wasser werden in den aus den nachfolgenden Tabellen ersichtlichen Mengen in beliebiger Reihenfolge zusammengemischt. Das eingesetzte Wasserglas hat eine Dichte von 1.362, das Molverhältnis von $Na_2O : SiO_2$ beträgt 0,2943; die Guanidinsilikatlösung hat eine Konzentration von 25 Gew.-% berechnet als $SiO_2$.

Die Verformung der Ansatzmischung erfolgt

a) bei den Beispielen 1 bis 4 mechanisch durch Strangpressen und Zerkleinern sowie Abrunden auf einem Drehteller mit stehenden Seitenwänden,

b) bei Beispiel 5 durch Eintropfenlassen in eine wäßrige Ammoniumsalzlösung, der in den Tabellen angegebenen Konzentration.

Die Ammoniumsalzlösung ist zur besseren Ausbildung der Kugelform mit wenigen Zentimetern Mineralöl überschichtet.

Die erstarrten Granulate werden nach 10 Minuten aus der Fällösung genommen.

Nach der Verformung folgt ein 4-stündiger Basenaustausch bei Zimmertemperatur, Abspülen mit Wasser, Trocknen bei 120°C und Tempern bei 350 bis 400°C.

4

In den nachfolgenden Tabellen sind die Ergebnisse wiedergegeben:

| | |
|---|---|
| Beispiel 1 — Magnesiumoxid — | Tabelle 1 |
| Beispiel 2 — andere Oxide — | Tabelle 2 |
| Beispiel 3 — Gemische — | Tabelle 3 |
| Beispiel 4 — Verschiedene Molekularsiebe — | Tabelle 4 |
| Beispiel 5 — Verformung durch Fällung — | Tabelle 5 |

In den Beispielen 1 bis 3 und 5 wurde stets ein Molekularsieb A eingesetzt.

Wie aus Tabelle 3 ersichtlich, kann auch Ton als Granulierhilfsmittel und zur Streckung mit eingesetzt werden, ohne daß die Adsorptionskapazität zu stark abnimmt.

Der Berstdruck der Granulate wird mit dem Gerät der Fa. Zwick gemessen. Dazu wird eine Perle auf einen verschiebbaren Tisch gelegt, der nach oben gegen einen Stempel gedrückt wird. Der Druck, bei dem die Perle zerplatzt wird in kg angegeben und ist der Berstdruck.

Die Abkürzungen in den Tabellen bedeuten:

MS — Molekularsieb

MeO — Metalloxid

Gua — Guanidinsilikat

WK — Wasserglas

B — Berstdruck von Kugelgranulaten von 2—5 mm Durchmesser i. kg pro Perle (Mittelwert von 25 Bestimmungen)

A — Wasserdampfaufnahme bei 20% r. F und 25°C in Gew.-% *)

Z — Zuwachs an Adsorptionskapazität in Prozent bezogen auf eingesetztes Molekularsieb

Basenaustauschlösung: Su — Ammoniumsulfat
Az — Ammoniumazetat
Cl — Ammoniumchlorid

*) Die Wasserdampfaufnahme beträgt:

| | |
|---|---|
| für das eingesetzte Molekularsieb A | 23 Gew.-% |
| für das eingesetzte Molekularsieb Y | 27 Gew.-% |
| für das eingesetzte Molekularsieb SK 20 | 27 Gew.-% |
| für das eingesetzte Molekularsieb X | 11 Gew.-% |

TABELLE 1, Magnesiumoxid

| Versuch Nr. | Eingesetzte Mengen | | | | | Zusammensetzg. des Granulats in Gew.–% Feststoff | | | | Basenaustauschlösg. | | B | A | Z |
| | MS g | MgO g | Gua g | WK g | $H_2O$ g | MS | MgO | Gua $(SiO_2)$ | WK | $NH_4$-Salz | Konz. Gew.–% | | | |
|---|---|---|---|---|---|---|---|---|---|---|---|---|---|---|
| 1 | 100,0 | 9,9 | 52,6 | | 21,1 | 77,8 | 9,3 | 12,9 | | Su | 16,5 | 6,1 | 21,8 | 22 |
| 2 | 100,0 | 15,0 | 80,0 | | 40,0 | 69,8 | 12,7 | 17,5 | | Su | 16,5 | 9,2 | 20,0 | 24 |
| 3 | 100,0 | 22,2 | | 83,3 | 31,1 | 61,2 | 16,5 | | 22,3 | Az | 20,0 | 7,4 | 20,4 | 45 |
| 4 | 100,0 | 28,9 | | 77,3 | 30,9 | 59,2 | 20,8 | | 20,0 | Su | 20,0 | 6,6 | 19,9 | 46 |
| 5 | 100,0 | 32,3 | | 121,0 | | 52,1 | 20,4 | | 27,5 | Su | 20,0 | 8,2 | 17,7 | 48 |
| 6 | 100,0 | 150,0 | | 200,0 | | 27,1 | 49,3 | | 23,6 | Su | 25,0 | 5,1 | 13,8 | 123 |

TABELLE 2, Andere Oxide

| Versuch Nr. | Eingesetzte Mengen | | | | | | Basenaustausch-Lsg. | | B | A | Z |
|---|---|---|---|---|---|---|---|---|---|---|---|
| | MS g | MeO g | MeO Typ | Gua g | WK g | $H_2O$ g | $NH_4$-Salz | Konz. Gew.—% | | | |
| 1 | 100,0 | 18,5 | CuO | | 111,1 | 9,3 | Su | 20,0 | 5,0 | 17,0 | 37 |
| 2 | 100,0 | 13,7 | BaO | | 51,4 | 13,7 | Cl | 20,0 | 4,5 | 10,0 | −39 |
| 3 | 100,0 | 10,0 | ZnO | | 50,0 | 15,0 | Az | 20,0 | 6,5 | 17,4 | 2 |
| 4 | 100,0 | 7,3 | ZnO | 58,0 | | 7,3 | Cl | 15,0 | 3,6 | 18,5 | 2 |
| 5 | 100,0 | 23,3 | $RE_2O_3$ | | 87,2 | 9,3 | Su | 20,0 | 3,0 | 11,8 | −16 |
| 6 | 100,0 | 17,4 | $TiO_2$ | | 65,2 | 13,0 | Cl | 20,0 | 7,1 | 17,0 | 11 |
| 7 | 100,0 | 17,4 | $TiO_2$ | | 65,2 | 13,0 | Su | 20,0 | 6,9 | 17,0 | 11 |
| 8 | 100,0 | 21,1 | $SnO_2$ | | 105,2 | | Su | 20,0 | 2,9 | 14,5 | 8 |
| 9 | 100,0 | 17,9 | PbO | | 89,3 | | Su | 20,0 | 5,0 | 14,2 | 1 |
| 10 | 100,0 | 11,1 | $V_2O_5$ | 33,3 | 36,7 | 57,8 | Su | 20,0 | 3,6 | 14,2 | −12 |
| 11 | 100,0 | 23,6 | $Sb_2O_3$ | | 88,3 | | Su | 20,0 | 4,5 | 14,8 | 8 |
| 12 | 100,0 | 17,6 | $Cr_2O_3$ | | 70,2 | 3,5 | Su | 20,0 | 4,5 | 16,3 | 9 |
| 13 | 100,0 | 20,0 | $MnO_2$ | | 75,0 | | Su | 20,0 | 5,9 | 14,2 | −3 |
| 14 | 100,0 | 23,8 | $Fe_2O_3$ | | 89,3 | | Su | 20,0 | 4,5 | 16,0 | 18 |
| 15 | 100,0 | 22,0 | $Co_2O_3$ | | 82,4 | | Su | 20,0 | 6,0 | 12,0 | −15 |
| 16 | 100,0 | 17,4 | NiO | | 87,2 | | Su | 20,0 | 3,6 | 15,0 | 4 |

TABELLE 3, Gemische

| Versuch Nr. | Eingesetzte Mengen | | | | | | | | Basenaustausch-Lsg. | | B | A | Z |
|---|---|---|---|---|---|---|---|---|---|---|---|---|---|
| | MS g | MgO g | ZnO g | Bentonit g | TiO$_2$ g | Gua g | WK g | H$_2$O g | NH$_4$-Salz | Konz. Gew.−% | | | |
| 1 | 100,0 | | 5,0 | 15,0 | | 5,0 | 40,0 | | Cl | 15,0 | 9,2 | 15,9 | −2 |
| 2 | 100,0 | | 5,0 | 10,0 | | 5,0 | 37,5 | 23,5 | Cl | 15,0 | 4,7 | 17,6 | 3 |
| 3 | 100,0 | | 10,0 | 3,0 | | | 50,0 | 10,0 | Az | 20,0 | 4,4 | 17,3 | 4 |
| 4 | 100,0 | | 6,0 | 15,0 | | 4,0 | 40,0 | 15,0 | Az | 20,0 | 7,7 | 17,4 | 7 |
| 5 | 100,0 | 5,9 | 5,9 | 10,6 | | | 58,8 | 23,5 | Az | 20,0 | 7,9 | 16,5 | 9 |
| 6 | 100,0 | 7,7 | | | 7,7 | | 57,7 | 20,0 | Su | 20,0 | 4,9 | 18,0 | 13 |
| 7 | 100,0 | 5,6 | 5,6 | 6,7 | | | 55,6 | 11,1 | Az | 20,0 | 5,3 | 18,2 | 14 |
| 8 | 100,0 | 25,0 | | 10,0 | | 70,0 | 30,0 | 25,0 | Su | 20,0 | 2,4 | 19,6 | 50 |

TABELLE 4, Verschiedené Molekularsiebe

| Versuch Nr. | Eingesetzte Mengen | | | | | Basenaustausch-Lsg. | | B | A | Z |
|---|---|---|---|---|---|---|---|---|---|---|
| | MS g | MS Typ | MgO g | WK g | $H_2O$ g | $NH_4$-Salz | Konz. % | | | |
| 1 | 100,0 | Y | 39,0 | 103,9 | 32,5 | Su | 20,0 | 4,2 | 17,9 | 28 |
| 2 | 100,0 | A | 32,3 | 121,0 | | Su | 20,0 | 8,2 | 17,7 | 48 |
| 3 | 100,0 | SK20 | 31,2 | 83,3 | 33,3 | Su | 20,0 | 7,5 | 22,0 | 42 |
| 4 | 100,0 | X | 33,3 | 88,9 | 80,0 | Su | 20,0 | 5,2 | 17,2 | 182 |

TABELLE 5, Verformung durch Fällung

| Versuch Nr. | Eingesetzte Mengen | | | | | | Fallösung | | Basenaustauschlsg. | | B | A | Z |
|---|---|---|---|---|---|---|---|---|---|---|---|---|---|
| | MG g | MgO g | ZnO g | Gua g | WK g | $H_2O$ g | $NH_4$-salz | Konz. Gew.-% | $NH_4$-Salz | Konz. Gew.-% | | | |
| 1 | 100,0 | | 30,0 | 87,5 | 40,0 | 50,0 | Cl | 15,0 | Az | 5,0 | 2,6 | 15,0 | 18 |
| 2 | 100,0 | 25,0 | | 100,0 | | 25,0 | Cl | 15,0 | Cl | 5,0 | 1,8 | 17,3 | 22 |
| 3 | 100,0 | 23,6 | | 70,6 | 47,0 | 38,9 | Cl | 33,0 | Su | 5,0 | 3,0 | 19,2 | 43 |
| 4 | 100,0 | 30,0 | | 87,5 | 37,5 | 15,0 | Cl | 15,0 | Cl | 5,0 | 3,2 | 20,8 | 64 |
| 5 | 100,0 | 76,9 | | 192,3 | | 69,2 | Su | 25,0 | Su | 3,0 | 2,2 | 18,8 | 107 |

## 0 003 752

### Patentansprüche

1. Verfahren zur Herstellung von Molekularsieb enthaltenden Granulaten guter mechanischer Festigkeit, dadurch gekennzeichnet, daß man Molekularsiebpulver und Metalloxide mit einer Silikatlösung gegebenenfalls unter Zusatz von Wasser anteigt, verformt, einen Basenaustausch vornimmt, trocknet und bei 300 bis 400°C tempert.

2. Verfahren nach Anspruch 1, dadurch gekennzeichnet, daß, bezogen auf Gesamtfeststoff im Granulat, die Metalloxide in einer Gesamtmenge von 5 bis 94, vorzugsweise 9 bis 50 Gew.-%, das Molekularsieb in einer Gesamtmenge von 1 bis 95, vorzugsweise 27 bis 79 Gewichtsprozent, und das wasserlösliche Silikat in einer Gesamtmenge von 5 vis 50, vorzugsweise 12 bis 28 Gew.-%, berechnet als Feststoff, eingesetzt werden, wobei als Metalloxide die Oxide von Kupfer, Barium, Zink, Magnesium, der Seltenen Erden, Titan, Zinn, Blei, Vanadin, Antimon, Chrom, Mangan, Eisen, Kobalt oder Nickel oder Gemische davon eingesetzt werden.

3. Verfahren nach einem der Ansprüche 1 oder 2, dadurch gekennzeichnet, daß als Silikatlösung eine wäßrige Lösung von Natriumsilikat mit einem Molverhältnis von $Na_2O : SiO_2$ von 0,26 bis 0,49, vorzugsweise 0,27 bis 0,30 oder eine Guanidinsilikatlösung mit einem $SiO_2$-Gehalt von 20 bis 40 Gew.-%, vorzugsweise 25 bis 35 Gew.-% eingesetzt wird.

4. Verfahren nach einem der Ansprüche 1 bis 3, dadurch gekennzeichnet, daß die Verformung durch Eintropfen des zu granulierenden Gemisches in eine Fällösung oder auf mechanischem Wege durch Verpressen, Aufbaugranulation oder Merumerizer erfolgt.

5. Verfahren nach Anspruch 4, dadurch gekennzeichnet, daß als Fällösung eine wäßrige Lösung eines Ammoniumsalzes vorgelegt wird, die eine Konzentration von 12 bis 36, vorzugsweise 15 bis 33 Gew.-% hat.

6. Verfahren nach einem der Ansprüche 1 bis 4, dadurch gekennzeichnet, daß der Basenaustausch nach der mechanischen Verformung mit einer Ammoniumsalzlösung einer Konzentration von 5 bis 33%, vorzugsweise von 15 bis 25% vorgenommen wird.

7. Verfahren nach einem der Ansprüche 1 bis 4, dadurch gekennzeichnet, daß der Basenaustausch nach der Verformung durch Fällung mit einer Ammoniumsalzlösung einer Konzentration von 2 bis 10% vorzugsweise 3 bis 5% vorgenommen wird.

8. Verwendung der nach einem der Ansprüche 1 bis 7 hergestellten Molekularsieb enthaltenden Granulate als Katalysatoren, Katalysatorträger oder Adsorptionsmittel.

9. Verwendung der nach einem der Ansprüche 1 bis 7 hergestellten, als Metalloxid Magnesiumoxid enthaltenden Granulate als Adsorptionsmittel.

10. Molekularsieb enthaltende Granulate bestehend aus 1 bis 95, vorzugsweise 27 bis 79, Gew.-% Molekularsieb, 5 bis 94, vorzugsweise 9 bis 50, Gew.-% Magnesiumoxid und 5 bis 46, vorzugsweise 10 bis 24 Gew.-% $SiO_2$.

### Revendications

1. Procédé de fabrication de granulés contenant un tamis moléculaire et ayant une bonne résistance mécanique, caractérisé en ce qu'on amène à l'état d'une pâte une poudre de tamis moléculaire et d'oxydes métalliques dans une solution de silicate, éventuellement avec addition d'eau, en ce qu'on met le mélange en forme, en ce qu'on effectue un échange de bases, en ce qu'on sèche et en ce qu'on effectue un traitement thermique à 300—400°C.

2. Procédé suivant la revendication 1, caractérisé en ce qu'on utilise, par rapport à la teneur totale du granulé en matières solides, de 5 à 94% en poids, de préférence de 9 à 50%, d'oxydes métalliques, une quantité globale de 1 à 95% en poids, de préférence de 27 à 79%, de tamis moléculaire et une quantité globale de 5 à 50% en poids de préférence de 12 à 28%, calculé en matière sèche, de silicate soluble dans l'eau, les oxydes métalliques mis en oeuvre étant choisis parmi les oxydes de cuivre, de baryum, de zinc, de magnésium, des terres rares, de titane, d'étain, de plomb, de vanadium, d'antimoine, de chrome, de manganèse, de fer, de cobalt ou de nickel, ou des mélanges de ceux-ci.

3. Procédé suivant l'une quelconque des revendications 1 ou 2, caractérisé en ce qu'on utilise, comme solution de silicate, une solution aqueuse de silicate de sodium ayant un rapport molaire $Na_2O : SiO_2$ compris entre 0,26 et 0,49, de préférence entre 0,27 et 0,30, ou une solution de silicate de guanidine ayant une teneur en $SiO_2$ de 20 à 40% en poids, de préférence de 25 à 35% en poids.

4. Procédé suivant l'une quelconque des revendications 1 à 3, caractérisé en ce que la mise en forme est effectuée par déversement goutte à goutte du mélange à granuler dans une solution de précipitation ou par voie mécanique par pressage, granulation structurale ou au moyen d'un "Merumerizer."

5. Procédé suivant la revendication 4, caractérisé en ce qu'on prépare au préalable, comme solution de précipitation, une solution aqueuse d'un sel d'ammonium ayant une concentration de 12 à 36% en poids, de préférence de 15 à 33% en poids.

6. Procédé suivant l'une quelconque des revendications 1 à 4, caractérisé en ce qu'on effectue l'échange de bases après la mise en forme en utilisant une solution d'un sel d'ammonium ayant une concentration de 5 à 33%, de préférence de 15 à 25%.

10

7. Procédé suivant l'une quelconque des revendications 1 à 4, caractérisé en ce qu'on effectue l'échange de bases après la mise in forme en réalisant une précipitation au moyen d'une solution d'un sel d'ammonium ayant une concentration de 2 à 10%, de préférence de 3 à 5%.

8. Utilisation des granulés contenant un tamis moléculaire fabriqués suivant l'une quelconque des revendications 1 à 7 comme catalyseurs, supports de catalyseur ou agents d'adsorption.

9. Utilisation comme agents d'adsorption des granulés contenant de l'oxyde de magnésium comme oxyde métalliques, fabriqués suivant l'une quelconque des revendications 1 à 7.

10. Granulés contenant un tamis moléculaire comprenant 1 à 95% en poids, de préférence 27 à 79%, de tamis moléculaire, 5 à 94% en poids, de préférence 9 à 50% d'oxyde de magnésium et 5 à 46% en poids, de préférence 10 à 24%, de SiO$_2$.

## Claims

1. A process for the preparation of granules which have good mechanical strength and contain a molecular sieve, characterised in that molecular sieve powders and metal oxides are worked into a paste with a silicate solution, if necessary with the addition of water, the paste is shaped, subjected to base exchange, dried and calcined at 300 to 400°C.

2. A process according to Claim 1, characterised in that, based on total solids in the granules, the metal oxides are employed in a total amount of 5 to 94, preferably 9 to 50% by weight, the molecular sieve in a total amount of 1 to 95, preferably 27 to 79, percent by weight, and the water-soluble silicate in total amount of 5 to 50, preferably 12 to 28% by weight, calculated as solids, the metal oxides employed being the oxides of copper, barium, zinc, magnesium, the rare earths, titanium, tin, lead, vanadium, antimony, chromium, manganese, iron, cobalt or nickel, or mixtures of these.

3. A process according to one of Claims 1 or 2, characterised in that the silicate solution employed is an aqueous solution of sodium silicate having a molar ratio of Na$_2$ : SiO$_2$ of 0.26 to 0.49, preferably 0.27 to 0.30, or a guanidine silicate solution having an SiO$_2$ content of 20 to 40% by weight, preferably 25 to 35% by weight.

4. A process according to one of Claims 1 to 3, characterised in that the shaping is effected by dropwise introduction of the mixture to be granulated into a precipitation solution, or is effected mechanically by pressing, built-up granulation or a merumerizer.

5. A process according to Claim 4, characterised in that the precipitation solution is an aqueous solution of an ammonium salt, the solution having a concentration of 12 to 36, preferably 15 to 33% by weight.

6. A process according to one of Claims 1 to 4, characterised in that the base exchange is effected, after mechanical shaping, with an ammonium salt solution which has a concentration of 5 to 33%, preferably of 15 to 25%.

7. A process according to one of Claims 1 to 4, characterised in that the base exchange is effected, after shaping by precipitation, with an ammonium salt solution which has a concentration of 2 to 10%, preferably of 3 to 5%.

8. The use of the granules containing a molecular sieve and prepared according to one of Claims 1 to 7, as catalysts, catalyst supports or adsorbents.

9. The use of the granules, prepared according to one of Claims 1 to 7 and containing magnesium oxide as the metal oxide, as adsorbents.

10. Granules, containing a molecular sieve and consisting of 1 to 95, preferably 27 to 79% by weight of molecular sieve, 5 to 94, preferably 9 to 50% by weight of magnesium oxide and 5 to 46, preferably 10 to 24% by weight of SiO$_2$.